Europäisches Patentamt

European Patent Office

Office européen des brevets

(19)

(11) Veröffentlichungsnummer: **0 003 548**
**B1**

## (12) EUROPÄISCHE PATENTSCHRIFT

(45) Veröffentlichungstag der Patentschrift:
**07.07.82**

(21) Anmeldenummer: **79100257.9**

(22) Anmeldetag: **30.01.79**

(51) Int. Cl.³: **C 02 F 3/12, C 02 F 3/20**

(54) **Vorrichtung zum biologischen Reinigen von Abwasser.**

(30) Priorität: **11.02.78 DE 2805794**

(43) Veröffentlichungstag der Anmeldung:
**22.08.79 Patentblatt 79/17**

(45) Bekanntmachung des Hinweises auf die Patenterteilung:
**07.07.82 Patentblatt 82/27**

(84) Benannte Vertragsstaaten:
**BE CH DE FR GB IT NL SE**

(56) Entgegenhaltungen:
**AT-A-326 057**
**CH-A-555 785**
**DE-A-2 554 440**
**DE-A-2 554 495**
**FR-A-2 060 224**
**US-A-3 872 003**

(73) Patentinhaber: **HOECHST AKTIENGESELLSCHAFT,**
**Postfach 80 03 20, D-6230 Frankfurt/Main 80 (DE)**

(72) Erfinder: **Bauer, Alexander, Dr., Lerchenweg 3,**
**D-6233 Kelkheim (Taunus) (DE)**
Erfinder: **Leistner, Gerhard, Dr., FreseniusstraBe 47,**
**D-6384 Schmitten/Taunus (DE)**
Erfinder: **Müller, Gerhard, Dipl.-Ing., FeldbergstraBe 76,**
**D-6233 Kelkheim (Taunus) (DE)**
Erfinder: **Sell, Günter, Dipl.-Ing., Stettiner StraBe 84,**
**D-6234 Hattersheim am Main (DE)**

## Vorrichtung zum biologischen Reinigen von Abwasser

Gegenstand der Erfindung ist eine Vorrichtung zum biologischen Reinigen von Abwasser und zum Entgasen und Klären von Schlamm-Wasser-Gemischen aus der biologischen Reinigungsstufe, deren Reaktor mit einer Einleitvorrichtung für Luft, einer Zuleitung für Abwasser und Belebtschlamm und einem Überlauf für das Schlamm-Wasser-Gemisch sowie mit einem Leitorgan zum Aufrechterhalten einer Schlaufe versehen ist.

Vorrichtungen gemäss Oberbegriff des Patentanspruchs sind unter anderem nach der Schweizer Patentschrift 485 476, der amerikanischen Patentschrift 3 872 003 sowie der deutschen Offenlegungsschrift 2 554 440 bekannt.

Nach der deutschen Offenlegungsschrift 2 554 495 sind hohe zylindrische Türme in Blasensäulenbauart zum biologischen Reinigen von Abwasser bekannt. Am oberen Rand der Türme sind trichterförmige Behälter für die Sedimentation des Schlammes angeordnet. Durch das Fehlen von Einbauten in den Türmen ist der Stoffaustausch ungünstig. Die angehängten trichterförmigen Behälter erfordern besonders teure bauliche Vorkehrungen zum Entgasen des Schlamm-Wasser-Gemisches.

Die Aufgabe zu vorliegender Erfindung bestand demnach darin, eine kosten- und platzsparende Vorrichtung mit besonders günstigem Stoffaustausch zu schaffen.

Die Aufgabe wird durch eine Vorrichtung gelöst, die dadurch gekennzeichnet ist, dass

a) im Reaktor oberhalb des Leitorganes ein mit Öffnungen versehener Zwischenboden angeordnet ist,

b) der Reaktor von einem Mantel umgeben ist, der mit seiner unteren Kante an der Reaktorwand befestigt ist und der sich nach oben erweitert, so dass ein konischer Ringraum um den Reaktor herum entsteht,

c) in dem konischen Ringraum konzentrisch zum Reaktor eine Einlaufrinne und eine Ablaufrinne angeordnet sind, und

d) in die Einlaufrinne die Überlauföffnungen des Reaktors münden.

Als Leitorgan eignet sich ein Rohr, dessen Querschnitt das 0,1- bis 0,7fache des Querschnittes des Reaktors beträgt. Als Leitorgane können 1 bis 15 Rohre im Reaktor angeordnet sein. Die Länge des Leitorganes soll 50 bis 90% der Säulenhöhe des Schlamm-Wasser-Gemisches im Reaktor betragen. Die Neigung des Mantels kann so gewählt werden, dass er mit der Reaktorwand einen Winkel von 10 bis 60 Grad einschliesst. Der Fussbereich des Ringraumes ist zweckmässig mit verschliessbarer Öffnung zur taktweisen Entnahme des Schlammes versehen. Um die Öffnungen herum sind Einbauten zum Leiten des Schlammes so angeordnet, dass tote Zonen im Fussbereich vermieden werden.

Im folgenden wird die Erfindung anhand der Fig. die einen schematischen Aufbau der Vorrichtung in beispielsweiser Ausführung zeigt, näher erläutert.

Der Reaktor 2, der den Belebungsraum bildet, ist mit einer Leitung 1 zum Zuführen des Abwassers (Rohwassers), einer Leitung 5 zum Einführen der Luft und einer Leitung 11 zum Einleiten von Belebtschlamm versehen. Im Belebungsraum befindet sich ein Leitorgan 4, das je nach Dimensionierung des Reaktors aus 1–15 Rohren bestehen kann. Aus Gründen der Übersichtlichkeit ist nur ein Rohr als Leitorgan 4 dargestellt. Die Linien 3 deuten die schlaufenförmige Bewegung des Schlamm-Wasser-Gemisches an.

In der Fig. strömt das Gemisch im Inneren des Leitorgans 4 abwärts. Die umgekehrte Strömungsrichtung ist ebenfalls möglich. Das Luftverteilerorgan 6, z.B. statische Mischer, Fritten oder Injektoren (Mischdüsen), kann prinzipiell so angeordnet sein, dass es möglich ist, die Luft an jeder beliebigen Stelle im Belebungsraum dem Schlamm-Wasser-Gemisch zuzuführen. Einige Alternativen sind durch die Organe 12 bis 15 dargestellt. Wird die Luft in das abwärtsströmende Gemisch entgegen den Auftriebskräften, die auf das Gas wirken, eingeleitet, so ist es zweckmässig, das Gemisch durch zusätzliche mechanische Energie, z.B. durch einen Rührer 16 oder durch einen mittels Pumpe 17 angetriebenen Schlamm-Wasser-Gemisch-Kreislauf 18, bei dem das Gemisch unterhalb der Wasseroberfläche des Reaktors abgenommen und im Bereich der Lufteinleitung dem Gemisch wieder zugegeben werden kann, in Bewegung zu halten. Der Reaktor 2 ist von einem Mantel 20 umgeben, der mit seiner unteren Kante 19 am Reaktor befestigt ist und der sich nach oben erweitert, so dass ein konischer Ringraum entsteht. Der Winkel α, den der Mantel so mit dem Reaktor 2 bildet, kann zwischen 10 und 60 Grad betragen. Im konischen Ringraum sind konzentrisch zum Reaktor 2 eine Einlauf- 21 und Ablaufrinne 22 angeordnet. Die Einlaufrinne 21, die z.B. über Überlauföffnungen 23 mit dem Belebungsraum in Verbindung stehen, können mit Fallfilmstrecken, Kaskaden oder mechanischen Entgasern zum Entgasen des Schlamm-Wasser-Gemisches versehen sein. Von der Einlaufrinne 21 gelangt das entgaste Gemisch z.B. über Rohre 24 in den Ringraum, in dessen Fussteil der Schlamm sedimentiert. Das Wasser sammelt sich in der Ablaufrinne 22 und kann von dort über Leitung 25 ablaufen. Der Fussteil des Ringraumes ist mit verschliessbaren Öffnungen 10 versehen, über die der Schlamm abgenommen wird. Zwischen benachbarten Öffnungen können im Fussteil Einbauten angebracht sein (nicht dargestellt), damit Toträume, die den Abfluss des Schlammes behindern würden, vermieden werden. Die Einbauten können schräge Flächen, Kegel od.dgl. sein.

Zu einer Nachreaktion des Gemisches ist im Reaktor oberhalb des Leitorgans 4 eine Lochplatte 7 oder ähnliches angeordnet. Durch die Lochplatte 7 kann das Gemisch in den oberen Teil des Reaktors gelangen. Rückvermischungen mit dem schlaufenförmig bewegten Gemisch werden vermieden. Oberhalb des Flüssigkeitsspiegels kann z.B. eine Dusche 9 zum Niederschlagen eventuell auftretender Schäume angeordnet sein. Über Leitung 8 wird die Abluft entnommen.

Beispiel Der Reaktor ist 20 m hoch; sein Durchmesser beträgt 5 m, der des Ringraumes 11 m, die Höhe des Ringraumes 6,5 m. Im Belebungsraum des Reaktors ist ein Leitrohr von 16 m Höhe und 2,8 m Durchmesser angeordnet. Der Schlamm-Wasser-Gemisch-Spiegel ist 18 m hoch. Die Luft und das Rohwasser (Abwasser) werden 9 m unterhalb des Gemischspiegels in das abwärts strömende Gemisch, das in schlaufenförmiger Bewegung gehalten wird, eingeleitet. Belebtschlamm wird am Fuss in den Belebungsraum eingeleitet. Schlamm-Wasser-Gemisch wird in der Höhe des Flüssigkeitsspiegels dem Reaktor entnommen und in den Ringraum eingeleitet.

Es werden 60 m³/h Abwasser mit einem BSB₅-Wert von 1200 mg/l, 510 Nm³/h Luft und 60 m³/h Belebtschlamm in den Reaktor eingeleitet. Der Belebtschlamm wird dem Ringraum entnommen.

Die Temperatur im Reaktor beträgt 20 °C.

Die Schlammkonzentration des den Reaktor verlassenden Gemisches beträgt 4 g/l, die des Belebtschlammes (Rücklaufschlamm) 8 g/l und die des Klarlaufes (das ist das den Ringraum verlassende Wasser) 20 mg/l.

Der Klarlauf hat einen BSB₅-Wert von 30–50 mg/l.

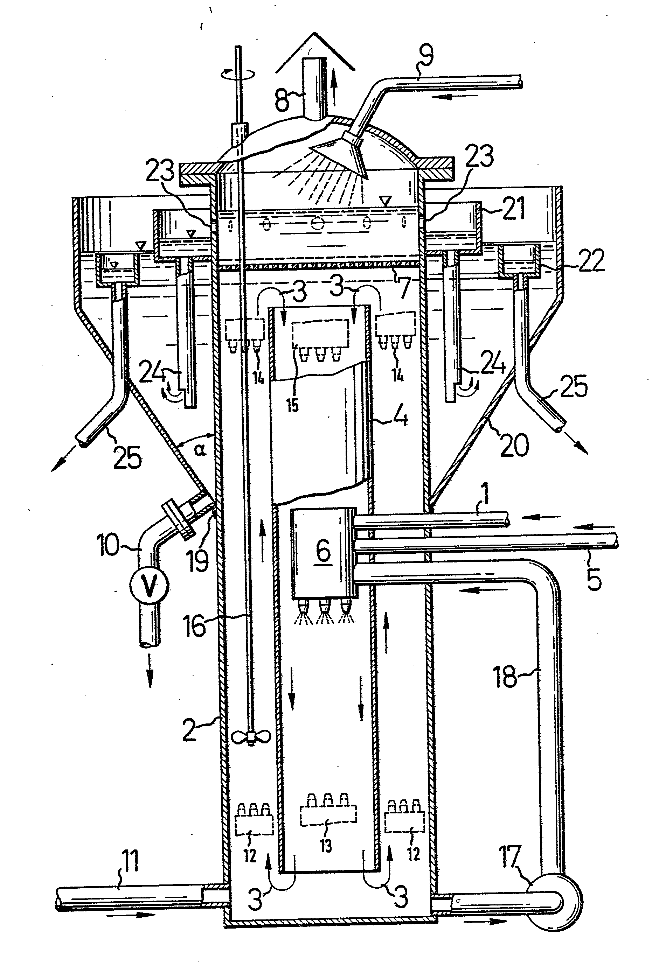

**Patentansprüche**

1. Vorrichtung zum biologischen Reinigen von Abwasser und zum Entgasen und Klären von Schlamm-Wasser-Gemischen aus der biologischen Reinigungsstufe, deren Reaktor mit einer Einleitvorrichtung für Luft, einer Zuleitung für Abwasser und Belebtschlamm und einem Überlauf für das Schlamm-Wasser-Gemisch sowie mit einem Leitorgan zum Aufrechterhalten einer Schlaufe versehen ist, dadurch gekennzeichnet, dass

a) im Reaktor (2) oberhalb des Leitorganes (4) ein mit Öffnungen versehener Zwischenboden (7) angeordnet ist,

b) der Reaktor (2) von einem Mantel (20) umgeben ist, der mit seiner unteren Kante (19) an der Reaktorwand befestigt ist und der sich nach oben erweitert, so dass ein konischer Ringraum um den Reaktor herum entsteht,

c) in dem konischen Ringraum konzentrisch zum Reaktor (2) eine Einlaufrinne (21) und eine Ablaufrinne (22) angeordnet sind, und

d) in die Einlaufrinne (21) die Überlauföffnungen (23) des Reaktors (2) münden.

2. Vorrichtung nach Anspruch 1, dadurch gekennzeichnet, dass der Mantel (20) mit der Reaktorwand einen Winkel von 10 bis 60 Grad einschliesst.

3. Vorrichtung nach den Ansprüchen 1 und 2, dadurch gekennzeichnet, dass der Ringraum im Fussbereich Öffnungen (10) zum Abzug des Schlammes aufweist und um die Öffnungen (10) Einbauten zum Leiten des Schlammes in Richtung der Öffnungen (10) angeordnet sind.

4. Vorrichtung nach Anspruch 3, dadurch gekennzeichnet, dass die Öffnungen (10) mit Verschlusseinrichtungen versehen sind.

**Claims**

1. A device for the biological purification of waste water and for the degasification and clarification of a sludgewater mixture resulting from said purification comprising a reactor having means for introducing air, means for introducing waste water, means for introducing activated sludge, outlet means for discharging sludge-water mixture, a quide element is disposed within said reactor and adapted for inducing a loop-shaped flow in the sludge-water mixture characterized in that

a) the reactor (2) is provided with a partition (7) having openings a level above said quide element (4),

b) the reactor (2) is provided with a jacket (20), the lower end (19) of which is sealingly joined to the periphery of the reactor and which jacket (20) spaced outwardly from the reactor (2) defining with said reactor (2) or conical annular space,

c) in the conical annular space is disposed on inlet element (21) and an outlet trough (22), and

d) the outlet means (23) of reactor (2) discharge into the inlet element (21).

2. The device as claimed in claim 1, characterized in that the jacket (20) forms an angle of 10 to 60° with the reactor wall.

3. The device as claimed in claims 1 to 2, characterized in that the annular area is provided with openings (10) in its bottom part for discharging the sludge and that inserts are arranged around the openings (10) for guiding the sludge towards the openings (10).

4. The device as claimed in claim 3, characterized in that the openings (10) are provided with closing means.

**Revendications**

1. Dispositif pour épurer biologiquement des eaux résiduaires, pour dégazer et clarifier un mélange eau-boue provenant de l'étape d'épuration biologique, dont le réacteur comporte un dispositif d'arrivée d'air, d'une amenée d'eaux résiduaires et de la boue activée et un déversoir pour le mélange eau-boue activée ainsi qu'un organe conducteur pour maintenir un mouvement cyclique, caractérisé en ce que:

a) dans le réacteur (2) est disposé un plateau troué (7) au-dessus de l'organe conducteur (4);

b) le réacteur (2) est entouré d'une enceinte (20) qui est fixée par sa partie inférieure (19) sur la paroi dudit réacteur, de telle sorte qu'un espace annulaire conique entoure ledit réacteur;

c) dans l'espace annulaire conique concentrique au réacteur (2) sont disposés une gouttière d'arrivée (21) et un dégorgeoir (22), et

d) les ouvertures de débordement (23) du réacteur (2) débouchent dans la gouttière d'arrivée (21).

2. Dispositif selon la revendication 1, caractérisé en ce que l'enceinte (20) fait avec la paroi du réacteur un angle compris entre 10 et 60 degrés.

3. Dispositif selon les revendications 1 et 2, caractérisé en ce que l'espace annulaire comporte, à sa partie inférieure, des ouvertures (10) pour retirer la boue et qu'autour desdites ouvertures (10) sont situés des chicanes pour diriger les boues vers lesdites ouvertures (10).

4. Dispositif selon la revendication 3, caractérisé en ce que lesdites ouvertures (10) comportent des dispositifs de fermeture.